Europäisches Patentamt

European Patent Office

Office européen des brevets

(19)

(11) Publication number: **0 203 677**

**A1**

## (12) EUROPEAN PATENT APPLICATION

(21) Application number: 86301392.6

(51) Int. Cl.4: **B60N 3/04**

(22) Date of filing: 26.02.86

(30) Priority: 08.03.85 GB 8506113

(43) Date of publication of application:
03.12.86 Bulletin 86/49

(84) Designated Contracting States:
AT DE GB SE

(71) Applicant: **CANNON RUBBER LIMITED**
**Cannon Works Ashley Road**
**Tottenham London N17 9LH(GB)**

(72) Inventor: **Atkin, Edward**
**4 Redington Road**
**London NW3(GB)**

(74) Representative: **Jenkins, Richard Gray et al**
**R.G.C. Jenkins & Co. 12-15, Fetter Lane**
**London EC4A 1PL(GB)**

(54) Vehicle floor mat.

(57) A vehicle floor mat (10) comprising a central portion (11) and a peripheral lip (12) surrounding the central portion (11) characterised in that the lip (12) is hinged to the central portion (11) so as to be angularly adjustable relative to the central portion - (11).

FIG. 1.

# VEHICLE FLOOR MAT

The present invention relates to a vehicle floor mat.

Vehicle floor mats made from a moulded rubberised material are well known. These mats are designed to be laid in the well of a vehicle floor to protect the carpeting material in the vehicle from wear and from dirt brought in on the driver or passenger's feet. Each vehicle model will normally have a well which is unique in shape and dimensions and slightly different to every other vehicle well. As a result, a moulded floor mat has to be designed to fit one specific vehicle model or alternatively has to be sufficiently small in its external dimensions to fit the smallest vehicle well in which case it will be too small for all of the others.

It is therefore an object of the present invention to provide a vehicle floor mat which is adapted to fit a range of vehicles and which therefore has a universal application.

In accordance with the present invention, we provide a vehicle floor mat comprising a central portion and a lip bordering the central portion characterised in that the lip is hinged to the central portion so as to be angularly adjustable relative to the central portion.

Preferably, the lip surrounds the periphery of the central portion. Thus, the vehicle floor mat of this type forms a complete water impermeable container for water, slush and dirt within the floor well of a vehicle to protect the carpeting of the vehicle.

Preferably the lip is adjoined to the central portion by a web of material of reduced thickness, relative to the thickness of the material forming the central portion, to constitute an integral flexible hinge.

The central portion of mat may be dished to form a well having a substantially flat base bordered by an upstanding continuous wall, the lip being hinged to the wall of the central portion.

In order to facilitate bending of the lip from a horizontal position towards a vertical position relative to the central portion, the lip may be corrugated at one or more corners of the mat. Preferably, the flutes of the corrugated portions of the lip extend generally radially outwardly from the central portion.

The vehicle floor mat of the present invention may be formed from any suitable material but is preferably moulded from a water impermeable rubberised material.

One embodiment of the present invention will now be described with reference to the accompanying drawings in which:

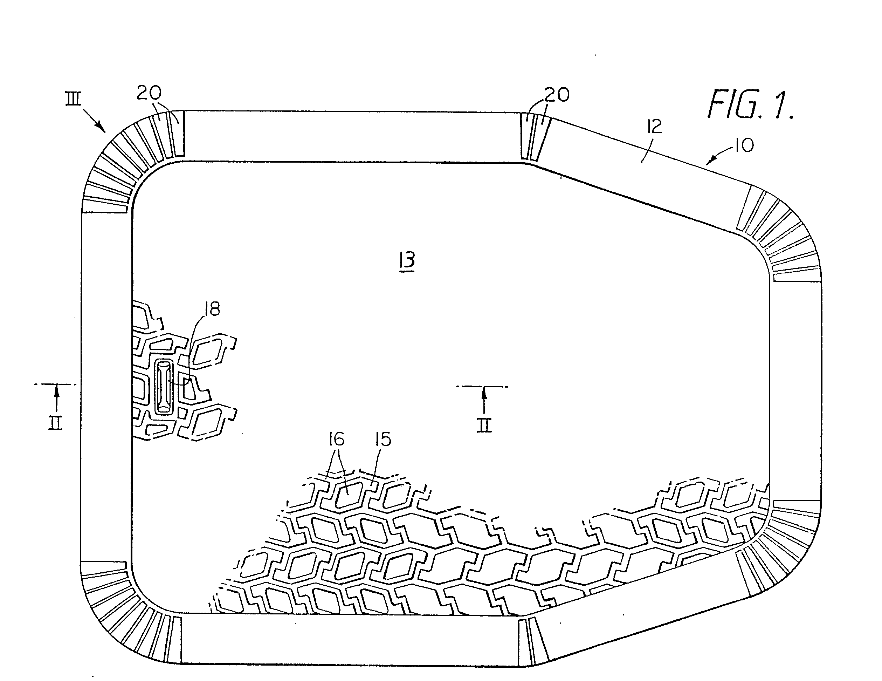

Figure 1 is a plan view of a vehicle floor mat according to the present invention;

Figure 2 is a section taken on the line II of Figure 1;

Figure 3 is a view of the mat of Figure 1 taken along the arrow 3; and

Figure 4 is a section through a part of the mat of Figure 1.

Figure 5 is a section similar to the one of Figure 2 but showing the lip of the mat in a raised position.

In the drawings a vehicle floor mat is indicated generally at 10 and is formed from any suitable rubberised material as an integral injection or compression moulding. Any suitable material may be employed and any preferred method of moulding. Preferably, the mat 10 is formed from relatively stiff moulded material so that it holds its shape in a self-supporting manner.

The mat 10 comprises a central portion 11 and a peripheral lip 12 which surrounds the central portion and which is hinged to the central portion so as to be angularly adjustable.

The central portion 11 is dished to form a well consisting of a substantially flat base 13 and an upstanding continuous side wall 14 which surrounds the base to form a well or reservoir to trap and contain slush and water which may be left on the mat by the vehicle driver or passenger.

The upper surface of the base of the mat has a moulded pattern comprising a plurality of upstanding ribs 15 and recesses 16 to hold and retain water, dirt and slush. The upper surface of the mat may be formed with any suitable moulded pattern or it may be flat and plain. It is also possible that the whole or part of the base may have a textile material attached to it to give the impression of carpeting over a part or the whole of the vehicle floor mat or that it may have a painted pattern applied to it for decoration.

The underside of the base of the mat is formed with a plurality of projecting, conical studs 17 which are moulded integrally with the mat. The studs 17 are designed to dig into the pile of the vehicle floor carpeting so as to resist movement of the mat 10 within the vehicle.

A recess 18 is provided in the upper surface of the base 13 to receive a metal or plastic plaque carrying the name of the manufacturer or the vehicle model for which the mat is designed.

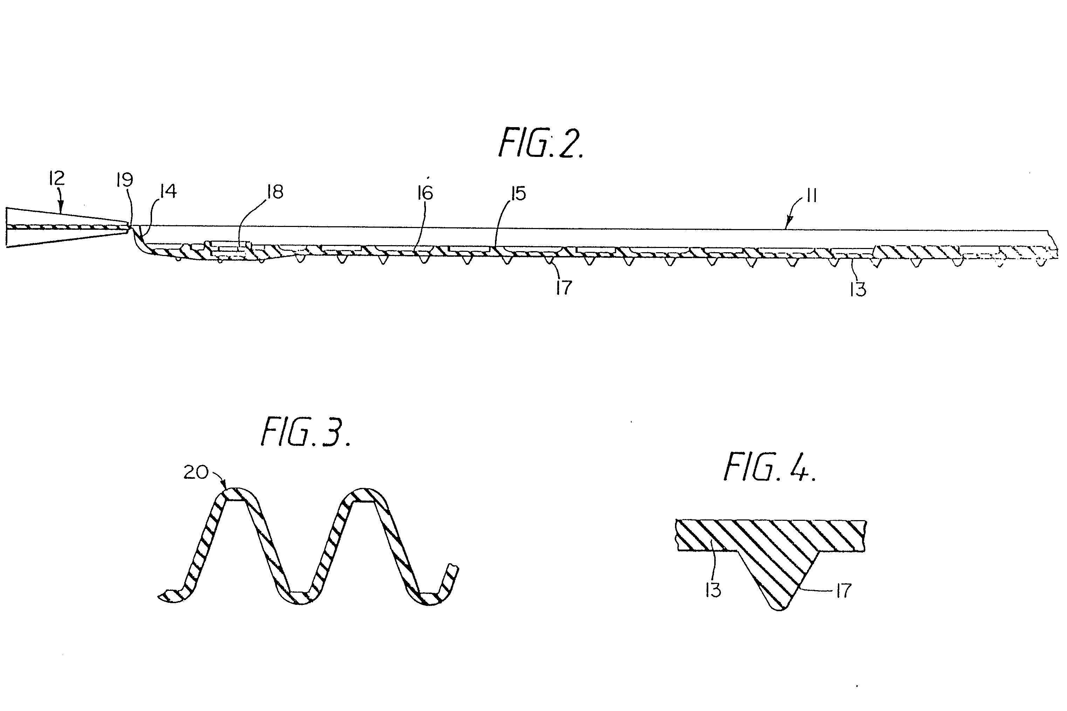

The peripheral lip 12 is joined to the upper edge of the wall 14 of the central portion by a web 19 which is of reduced material thickness relative to the thickness of the material forming the wall 14 so as to constitute an integral flexible hinge which enables the lip to be angularly adjusted from the planar position shown in Figure 2, in which the lip lies in a plane parallel to the plane of the base, into a generally vertical position in which it is approximately perpendicular to the base. In Figure 5, the lip is shown angled at approximately 60° to the horizontal.

At each corner of the mat, the lip is corrugated, as shown in Figure 3 by forming flutes 20 which extend generally radially outwardly from the central portion 11. When the lip 12 is in the flat position shown in Figure 2, the flutes 20 of the lip are relatively open and spread apart. As the lip is lifted towards the vertical position, the flutes close enabling the lip to be lifted into the vertical relatively easily.

In use, the mat 10 is laid in the well of a vehicle so that the base is positioned on the floor of the vehicle with the studs 17 projecting into the pile of the vehicle carpet to resist movement of the mat within the vehicle. The base 13 of the mat is designed to be approximately the shape of the well of the vehicle but slightly smaller in dimension. As the mat is inserted into the well of the vehicle, the lip will engage the side walls of the well of the vehicle and will be moved from the flat position towards the vertical by an amount which will depend upon the difference in the size of the well and the size of the central portion of the mat. When the mat has been positioned within the vehicle well, the lip of the mat will rest against the side wall of the well and will effectively cover the whole of the vehicle well forming a complete reservoir for water dirt and slush which may be brought into the car on the driver or passenger's feet thereby forming a complete protection for the vehicle carpet.

It will be seen that the mat 10 is adapted to fit closely within a vehicle well having dimensions which fall anywhere between the dimensions of the periphery of the central portion of the mat and the outer periphery of the lip. The mat can therefore be used as a proper fit in a wide range of vehicles and is not limited to one particular model.

A mat according to the present invention may comprise a plurality of materials having different characteristics. For example, the corners of the mat could be formed from a relatively soft moulded material to facilitate angular adjustment of the peripheral lip whilst the remainder of the mat is formed from a relatively stiff moulded material. Another possibility would be to form the corners of the mat from textile or other readily deformable material.

In practice, the different materials could be joined together by moulding, welding, sewing or using glue etc as appropriate.

It is envisaged that the lip of the mat may extend along only a part of the periphery of the central portion. For example, two hinged lips may be provided along two opposed sides of a rectangular central portion so that only the width of the mat, and not its length, is variable. Other arrangements are also possible.

In such a case the mat may still be effective in retaining water if the central portion is dished. It is also envisaged that this feature may be employed even when the central portion is not dished if the circumstances require a mat of variable size in which water retention is unnecessary.

**Claims**

1. A vehicle floor mat (10) comprising a central portion (11) and a lip (12) bordering the central portion (11) characterised in that the lip (12) is hinged to the central portion (11) so as to be angularly adjustable relative to the central portion - (11).

2. A mat (10) according to claim 1 characterised in that the lip (12) surrounds the periphery of the central portion(11).

3. A mat (10) as claimed in claim 1 or claim 2, characterised in that the lip (12) is joined to the central portion (11) by a web (19) of material of reduced thickness, relative to the thickness of the material forming the central portion (11) to constitute an integral flexible hinge.

4. A mat (10) as claimed in any preceding claim characterised in that the central portion (11) is dished to form a well having a substantially flat base (13) bordered by an upstanding continuous wall (14), the lip (12) being hinged to the wall (14) of the central portion (11).

5. A mat (10) as claimed in any preceding claim, characterised in that the lip (12) is corrugated at one or more corners of the mat to facilitate bending of the lip (12) from a horizontal towards a vertical position.

6. A mat (10) as claimed in claim 5 characterised in that the flutes (20) of the corrugated portions of the lip (12) extend generally radially outwardly from the central portion (11).

7. A mat (10) as claimed in any preceding claim formed of a moulded water impermeable rubberised material.

FIG. 1.

0 203 677

FIG.2.

FIG.3.

FIG.4.

0 203 677

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 211 447 (DIVINCENZO) <br> * Column 1, line 60 - column 2, line 55; figures * <br><br> --- | 1 | B 60 N 3/04 |
| A | US-A-4 479 280 (YAMAZAKI) <br><br> --- | | |
| A | CA-A-1 120 516 (DUPONT) <br><br> --- | | |
| A | FR-A-1 082 050 (FORD) <br><br> --- | | |
| A | US-A-3 149 875 (STATA) <br><br> --- | | |
| A | US-A-2 934 778 (BOYD) <br><br> --- | | TECHNICAL FIELDS SEARCHED (Int. Cl.4) <br><br> A 47 G 27/00 <br> B 60 N 3/00 <br> B 62 D 25/00 |
| A | US-A-3 823 058 (MITSUJI) <br><br> ----- | | |

The present search report has been drawn up for all claims

| Place of search | Date of completion of the search | Examiner |
|---|---|---|
| THE HAGUE | 16-07-1986 | HORVATH R.C. |